Europäisches Patentamt

(19) European Patent Office

Office européen des brevets

(11) EP 0 604 745 B1

(12) EUROPEAN PATENT SPECIFICATION

(45) Date of publication and mention
of the grant of the patent:
02.01.1997 Bulletin 1997/01

(51) Int. Cl.$^6$: **B62D 21/00**, B62D 21/18,
B62D 23/00

(21) Application number: 93118275.2

(22) Date of filing: 11.11.1993

(54) **A tubular structure for the construction of motor-vehicle frames**

Rohrförmige Struktur für ein Fahrzeuggestell

Structure tubulaire pour la construction du chassis d'un véhicule

(84) Designated Contracting States:
DE FR GB SE

(30) Priority: 30.12.1992 IT TO921058

(43) Date of publication of application:
06.07.1994 Bulletin 1994/27

(73) Proprietor: FIAT AUTO S.p.A.
10135 Torino (IT)

(72) Inventors:
• Da Re', Mario
I-10128 Torino (IT)

• Guidoboni, Paolo Giuseppe
I-10129 Torino (IT)

(74) Representative: Marchitelli, Mauro et al
c/o JACOBACCI & PERANI S.p.A.
Corso Regio Parco, 27
10152 Torino (IT)

(56) References cited:
GB-A- 462 070          US-A- 3 293 822
US-A- 4 288 025

• DATABASE WPI Week 8323, Derwent
Publications Ltd., London, GB; AN 83-54743K &
JP-58 070 990 (NIPPON STEEL CORPORATION)

## Description

The present invention relates to a tubular structure for the construction of motor-vehicle frames.

Some models of motor-vehicle are currently produced with frames having elements made of welded sheet-steel tubes. The use of tubular structures mainly involves portions of the frame such as the front cross member, the cross member under the dashboard, the frame for supporting the engine, the transverse reinforcing members and other very strong elements. The tubular structures concerned are generally manufactured by the following steps:

- bending the portions of tube to the desired shape by means of known techniques,

- forming the tubes which are required to have variable cross-sections along their longitudinal axes by hydro forming, and

- welding the tubes and the necessary reinforcing gussets.

In the regions in which two or more tubular structures are joined in order to make up portions of a motor-vehicle frame, it is necessary to provide reinforcing plates welded to the ends of the elements which converge at a junction of the frame.

The object of the present invention is to provide a tubular structure which enables the reinforcing elements to be eliminated whilst keeping the cost of the tubular structures within low limits.

According to the invention, this object is achieved by the provision of a tubular structure comprising at least two sheet-metal elements of equal thickness but with different mechanical strengths which are disposed symmetrically with respect to a plane passing through the longitudinal axis of the structure and which are joined together by means of a weld extending parallel to the axis of the structure.

Further characteristics and advantages of the invention will become clear in the course of the detailed description which follows, given purely by way of non-limiting example, with reference to the appended drawings, in which:

Figures 1 and 2 show the steps of the manufacture of a tubular structure with a circular cross-section,

Figures 3 and 4 show the steps of the manufacture of a tubular structure with a quadrangular cross-section,

Figure 5 is a schematic view of a portion of a motor-vehicle frame using the tubular structure according to Figure 4, and

Figure 6 is a diagram for calculating the stresses in the portion of frame shown in Figure 5.

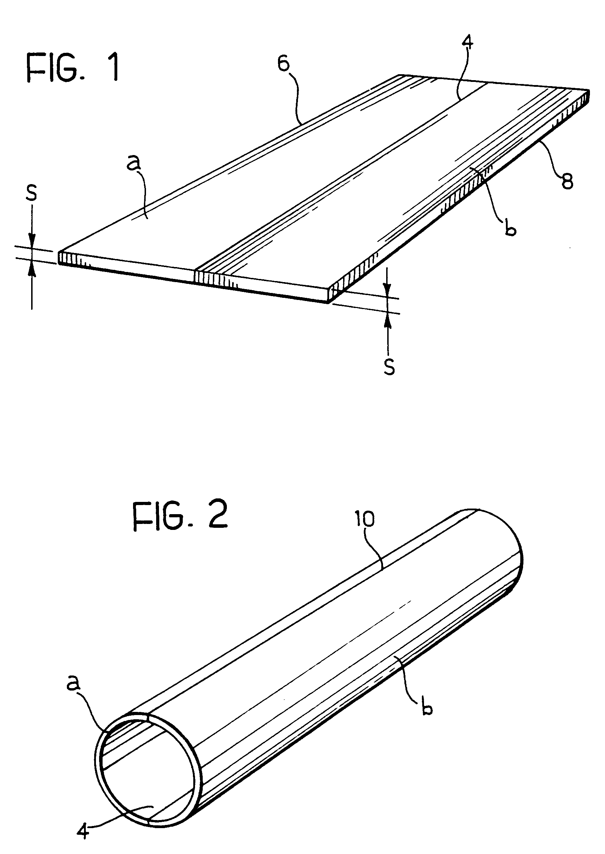

With reference to Figure 1, two sheet-steel elements indicated a and b are joined together by means of a weld 4 formed by electrical or laser welding. The two sheet-metal elements a and b are of the same thickness s but of different qualities. The flat sheet formed by the two elements a and b is subjected to a rolling operation of known type, upon completion of which the longitudinal edges 6, 8 are close together (Figure 2).

The edges 6, 8 are joined by an electrical or laser weld 10.

The size of the tube, the characteristics of the welded sheet-metal elements and the transverse dimensions of the welded sheet-metal elements are appropriate for the required size and mechanical strength of the final component (the frame). The tubes produced by the method described are processed by bending, possibly forming by fluid means, and mask welding.

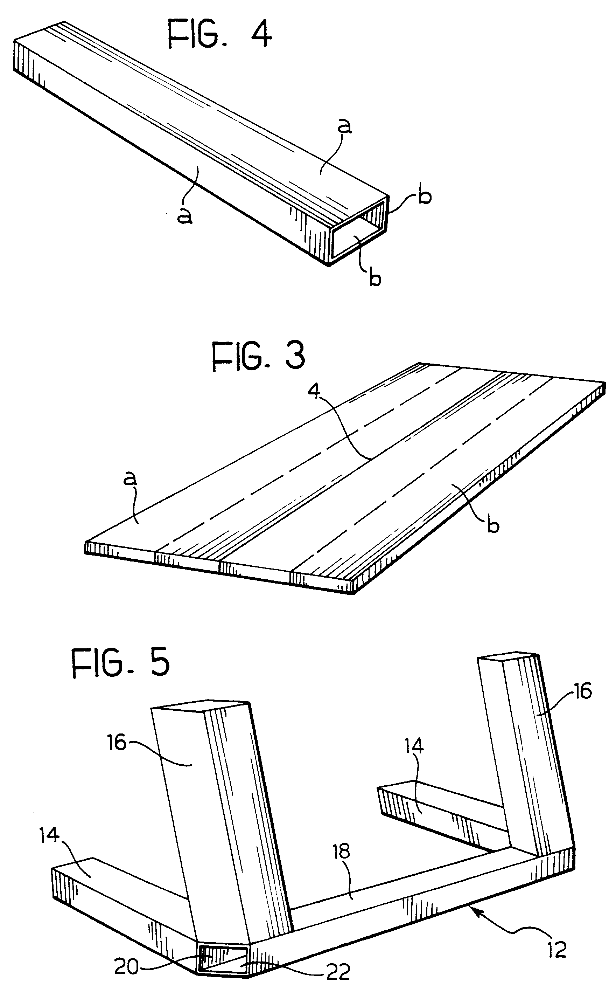

With reference to Figure 3, instead of being rolled, the two sheet-metal elements a, b may be bent so as to form a tubular structure with a quadrangular cross-section (Figure 4.).

Figure 5 shows a portion of a motor-vehicle frame formed by welded tubes. The frame portion shown in Figure 5 comprises a cross member 12, to the ends of which two side members 14 and two struts 16 are welded. The surfaces 18 and 20 of the cross member 12 directly bear the forces coming from the struts 16 and from the side members 14, respectively and are therefore made of very strong sheet metal. The other surfaces 22 and 24 of the cross member 12 may be made of a poorer-quality and less expensive sheet metal. The technique described eliminates the need for the reinforcing gussets which, with usual techniques, would be necessary in the regions in which the tubes 12, 14 and 16 are connected.

The sheet metals normally used in the automotive field are cold rolled sheet steels with thicknesses of less than 3 mm and are standardised by the European standard Euronorm 130-77 (which corresponds to the Italian standard UNI 5866-77). The Euronorm standard divides sheet steels into four categories; the fracture stress R varies from a minimum of 270 N/mm$^2$ to a maximum of 410 N/mm$^2$ and the yield stress $R_s$ varies from 180-280 N/mm$^2$.

If both the elements a, b are of the sheet metals normally used, assuming that the sheet-metal element a is the stronger of the two ones, the following should be true: $R_a/R_b$ = 1-1.5 and $R_{sa}/R_{sb}$ = 1-1.9 . If several sheet-metal elements are used, these ratios must be checked between each contacting pair of sheet-metal elements.

In order to withstand greater forces, cold-rolled sheet steels with high limits of elasticity (HLE) may be used in order to increase the safety factor for a given weight or so that pieces of equivalent strength can be lighter.

HLE sheets are standardised by the European standard Euronorm 149-80. The mechanical characteristics of these sheets fall within the following ranges:

$$R = 370\text{-}550 \ N/mm^2$$

$$R_s = 280\text{-}460 \ N/mm^2.$$

In this case, if the sheet-metal elements a and b are both HLE sheets, assuming that the element a is the stronger, the following should be true: $R_a/R_b$ = 1-1.4 and $R_{sa}/R_{sb}$ = 1-1.6 .

If, on the other hand, the sheet-metal element a is of the HLE type and the sheet-metal element b is of the normal type, the ratios should be: $R_a/R_b$ = 1-2 and $R_{sa}/R_{sb}$ = 1-3.3 .

It is also possible to use the rephosphorated sheet steels with high limits of elasticity (HLE) already provided for by the German standard SEW 094-87, which have the following characteristics:

$$R = 370\text{-}500 \ N/mm^2$$

$$R_s = 260\text{-}360 \ N/mm^2.$$

In this case, if the sheet-metal elements a and b are both of the type mentioned above, the following should be true: $R_a/R_b$ = 1-1.3 and $R_{sa}/R_{sb}$ = 1-1.3 .

If, however, the sheet-metal element a is a rephosphorated HLE sheet steel and b is a normal sheet steel, the following should be true: $R_a/R_b$ = 1-1.9 and $R_{sa}/R_{sb}$ = 1-2.5 .

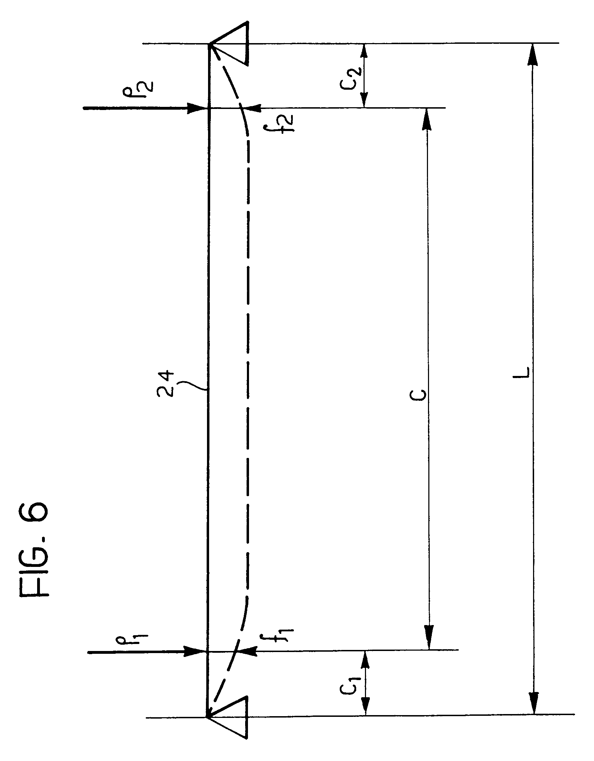

With reference to Figure 6, the cross member 12 may be represented diagrammatically as a beam which is supported at its ends and is subjected to two concentrated loads P1 and P2 in regions near its ends.

The forces at each end are the sum of those due to the strut and to the side member.

The object of the invention is to reduce to a minimum the deflections due to the loads, for which the following equation applies:

$$f_1 = \frac{1}{3} \cdot \frac{P_1 . C_1^2 . (C+C_2)^2}{E.J.L} + \frac{1}{6} \cdot \frac{P_2 . L^2}{E.J} \cdot C_2 \cdot \left[ 1 - \left( \frac{C_2}{L} \right)^2 - \left( \frac{C_1}{L} \right)^2 \right] \cdot \frac{C_1}{L}$$

(where J is the moment of inertia of the cross-section of the beam with respect to its neutral bending axis); the same applies to f2.

Since $E = \sigma / \varepsilon \ N/mm^2$ , that is, the modulus of elasticity with a normal tensile stress, is the ratio between unit stress and the corresponding unit longitudinal strain, clearly for a given deformation, the greater the strength of the material, the greater is the value of E and consequently the smaller the deflection.

The value of E to be inserted in the formula is closer to that of the stronger material, since the surfaces 18 and 20 are directly in contact with the elements which stress the cross member.

In particular, in the example in question:

$$E = \frac{2}{3} E_a + \frac{1}{3} E_b$$

where E is the value of the modulus of elasticity to be inserted in the formula to calculate the deflection of the cross member and $E_a$ and $E_b$ are the moduli of elasticity of the materials constituting the faces 18, 20 and 22, 24, respectively.

The reduction in the deflections which can be achieved is such that it is not necessary to use reinforcing gussets.

## Claims

1. A tubular structure for the construction of motor-vehicle frames, characterised in that it comprises at least two sheet-metal elements (a, b) of equal thickness (s) but with different mechanical strengths, which are disposed symmetrically with respect to a plane passing through the longitudinal axis of the structure and which are joined together by means of a weld (4, 10) extending parallel to the axis of the structure.

2. A tubular structure according to Claim 1, characterised in that at least one of the said two elements (a, b) is made of sheet-metal having a yield stress of between 180 and 280 $N/mm^2$ and/or a fracture stress of between 270 and 410 $N/mm^2$.

3. A tubular structure according to Claim 1, characterised in that at least one of the said two elements (a, b) is made of sheet metal having a yield stress of between 260 and 460 $N/mm^2$ and/or a fracture stress of between 370 and 550 $N/mm^2$.

4. A tubular structure according to Claim 1, characterised in that the ratio between the fracture stress of the sheet-metal element with the greater mechanical strength and that of the element with the lesser mechanical strength is between 1 and 2.

5. A tubular structure according to Claim 1, characterised in that the ratio between the yield stress of the sheet-metal element with the greater mechanical strength and that of the sheet-metal element with the lesser mechanical strength is between 1 and 3.3.

## Patentansprüche

1. Rohrförmige Struktur für die Konstruktion von Rahmen für Motorfahrzeuge, dadurch gekennzeichnet, daß sie mindestens zwei Blechelemente (a, b) gleicher Dicke (s), jedoch unterschiedlicher mechanischer Festigkeit umfaßt, die symmetrisch bezüglich einer durch die Longitudinalachse der Struktur verlaufenden Ebene angeordnet sind und die mittels einer Schweißung (4, 10), welche sich parallel zur Achse der Struktur erstreckt, miteinander verbunden sind.

2. Rohrförmige Struktur nach Anspruch 1, dadurch gekennzeichnet, daß zumindest eines der beiden Elemente (a, b) aus einem Blech hergestellt ist, das eine Streckgrenze zwischen 180 und 280 $N/mm^2$ und/oder eine Zugfestigkeit zwischen 270 und 410 $N/mm^2$ aufweist.

3. Rohrförmige Struktur nach Anspruch 1, dadurch gekennzeichnet, daß zumindest eines der beiden Elemente (a, b) aus einem Blech hergestellt ist, das eine Streckgrenze zwischen 260 und 460 $N/mm^2$ und/oder eine Zugfestigkeit zwischen 370 und 550 $N/mm^2$ aufweist.

4. Rohrförmige Struktur nach Anspruch 1, dadurch gekennzeichnet, daß das Verhältnis der Zugfestigkeit des Blechelementes mit der größeren mechanischen Festigkeit zu der des Elementes mit der geringeren mechanischen Festigkeit zwischen 1 und 2 liegt.

5. Rohrförmige Struktur nach Anspruch 1, dadurch gekennzeichnet, daß das Verhältnis der Streckgrenze des Blechelementes mit der größeren mechanischen Festigkeit zu der des Blechelementes mit der geringeren mechanischen Festigkeit zwischen 1 und 3,3 liegt.

## Revendications

1. Structure tubulaire de construction de châssis de véhicule à moteur, caractérisée en ce qu'elle comprend au moins deux éléments métalliques en feuille (a, b) de même épaisseur (s) mais de résistances mécaniques différentes, placés symétriquement par rapport à un plan passant par l'axe longitudinal de la structure et qui sont raccordés par une soudure (4, 10) placée parallèlement à l'axe de la structure.

2. Structure tubulaire selon la revendication 1, caractérisée en ce que l'un au moins des deux éléments (a, b) est formé d'une feuille métallique ayant une limite élastique comprise entre 180 et 280 $N/mm^2$ et/ou une contrainte de fracture comprise entre 270 et 410 $N/mm^2$.

3. Structure tubulaire selon la revendication 1, caractérisée en ce que l'un au moins des deux éléments (a, b) est formé d'un métal en feuille dont la limite élastique est comprise entre 260 et 460 $N/mm^2$ et/ou la contrainte de fracture est comprise entre 370 et 550 $N/mm^2$.

4. Structure tubulaire selon la revendication 1, caractérisée en ce que le rapport des contraintes de fracture de l'élément métallique en feuille ayant la plus grande résistance mécanique et de l'élément ayant la plus petite résistance mécanique est compris entre 1 et 2.

5. Structure tubulaire selon la revendication 1, caractérisée en ce que le rapport de la limite élastique de l'élément métallique en feuille ayant la plus grande résistance mécanique et de celle de l'élément mécanique en feuille ayant la plus petite résistance mécanique est compris entre 1 et 3,3.

FIG. 1

FIG. 2

FIG. 4

FIG. 3

FIG. 5

FIG. 6

EP 0 604 745 B1